Europäisches Patentamt

European Patent Office

Office européen des brevets

(19)

(11) Numéro de publication: **0 227 570**
**A2**

## (12) DEMANDE DE BREVET EUROPEEN

(21) Numéro de dépôt: 86450022.8

(22) Date de dépôt: 21.11.86

(51) Int. Cl.⁴: **B 29 C 67/14**
**D 04 B 1/00**

(30) Priorité: 22.11.85 FR 8517423

(43) Date de publication de la demande:
01.07.87 Bulletin 87/27

(84) Etats contractants désignés:
AT BE CH DE ES FR GB GR IT LI LU NL SE

(71) Demandeur: SOCIETE CIVILE D'INVENTEURS SPML
29 avenue du Général Leclerc
F-33110 Le Bouscat (FR)

(72) Inventeur: Melec, Didier 4 Les Landes de Basson
Chemie de la Tuilerie St.-Aubin-du-Medoc
F-33160 Saint-Medard-en-Jalles (FR)

Peres, Claudine
29, avenue du Général Leclerc
F-33110 Le Bouscat (FR)

You, Claudine
Cité de Castors La Poueze
F-49370 Le Louroux-Beconnais (FR)

Lefere, Geneviève
3 Allée de Frescaty
F-57158 Montigny-les-Metz (FR)

(74) Mandataire: Thébault, Jean-Louis
Cabinet Jean-Louis Thébault 50, Cours de Verdun
F-33000 Bordeaux (FR)

(54) **Nouveau produit composite à base d'armature de fils ou fibres notamment tissés ou tricotés enroulée sur elle-meme ou en couches concentriques.**

(57) L'invention concerne un nouveau produit composite à base d'armature de fils ou fibres. notamment tissés ou tricotés, enroulée sur elle-même ou en couches concentriques, caractérisé en ce qu'il est constitué d'une armature ou étoffe comprenant au moins une nappe (1) enroulée sur elle-même ou plusieurs nappes tubulaires (4) disposées concentriquement, de fils ou fibres tissés, non-tissés ou tricotés. et de fils ou fibres de renfort (2,3) insérés entre au moins certaines des couches successives de la ou les nappes. parallèlement à l'axe de la structure enroulée ou concentrique et transversalement à cette dernière. l'ensemble étant moulé dans une matrice de liaison.

Application à l'obtention de pièces à hautes résistances mécaniques.

FIG.2.

**Description**

## NOUVEAU PRODUIT COMPOSITE A BASE D'ARMATURE DE FILS OU FIBRES NOTAMMENT TISSES OU TRICOTES ENROULEE SUR ELLE-MEME OU EN COUCHES CONCENTRIQUES

La présente invention a trait à un nouveau produit composite constitué à partir d'une armature ou étoffe de fils ou fibres, notamment tissés ou tricotés, et disposée suivant un enroulement ou suivant des couches concentriques.

Le but de l'invention est de proposer un nouveau produit composite présentant d'excellentes propriétés multidirectionnelles, notamment de résistance mécanique, alliées à une grande légèreté, et susceptibles d'un très grand nombre d'applications.

A cet effet, l'invention a pour objet un nouveau produit composite caractérisé en ce qu'il est constitué d'une armature ou étoffe comprenant au moins une nappe enroulée sur elle-même ou plusieurs nappes tubulaires disposées concentriquement, de fils ou fibres tissés, non-tissés ou tricotés, et de fils ou fibres de renfort insérés entre au moins certaines des couches successives de la ou les nappes, parallèlement à l'axe de la structure enroulée ou concentrique et transversalement à cette dernière, l'ensemble étant moulé dans une matrice de liaison.

Les matériaux et dimensions des fils ou fibres, la contexture de l'armature, ou étoffe, et la nature de la résine de la matrice de liaison, peuvent varier dans de très larges mesures ,en fonction des applications envisagées, de la morphologie de la pièce à réaliser dans le matériau et des sollicitations ou contraintes particulières auxquelles cette pièce doit faire face.

Le produit se présente sous la forme d'un bloc plus ou moins rigide selon la nature de la matrice et peut être usiné par tous moyens appropriés pour obtenir une pièce monobloc.

D'autres caractéristiques et avantages ressortiront de la description qui va suivre d'exemples de mise en oeuvre de l'invention, en référence. notamment, aux dessins annexés sur lesquels :

- Figure 1 illustre une technique spéciale de tricotage particulièrement apte à la réalisation de structures conformes à l'invention,

- Figure 2 représente schématiquement un ensemble multidirectionnel selon l'invention,

- Figure 3 est une vue en coupe perpendiculaire à l'axe y de la structure de la figure 2, et

- Figure 4 est une vue en coupe d'une structure selon l'invention formée à partir d'armatures tubulaires concentriques.

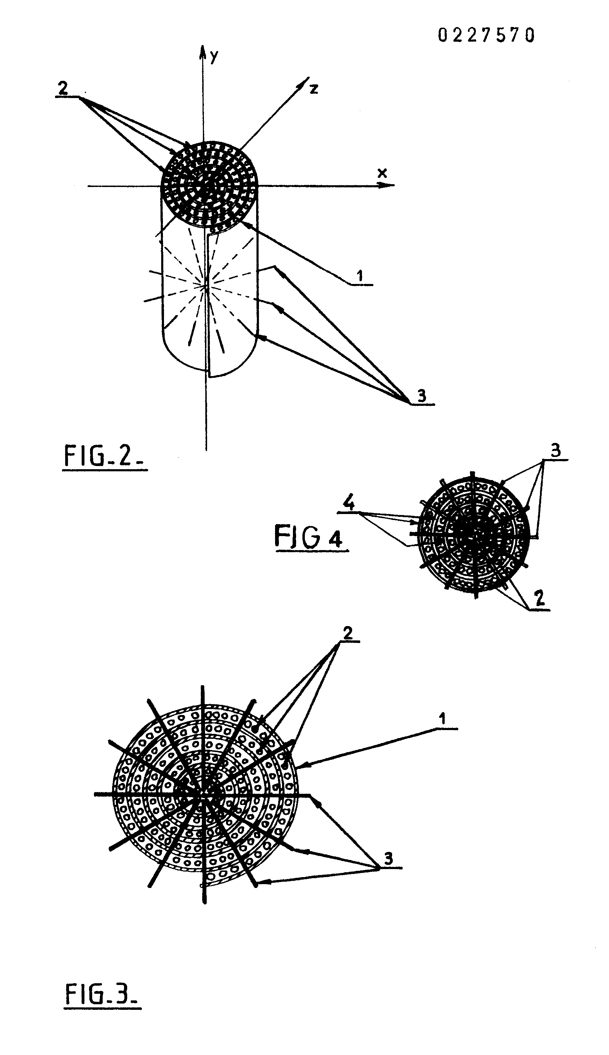

Le produit selon l'invention. dans le mode de réalisation illustré par les figures 2 et 3, comprend une ou plusieurs nappes 1 superposées de fils ou fibres. tissés. non-tissés ou tricotés. Le matériau de chaque fil ou fibre peut être quelconque. On peut utiliser, selon les applications, des fibres végétales à base de cellulose, comme le lin ou le jute, des fibres animales, comme la laine, le crin, des fibres minérales. comme l'amiante, l'alumine. des fibres synthétiques. par exemple polyesters, polyamides, acryliques, fluorocarbonées ou dérivées de la cellulose (acétate, rayonne. viscose, etc...). Il peut s'agir aussi de fibres dites à hautes performances telles que fibres de verre, de carbone, des fibres aramides. Chaque fil peut être homogène ou hétérogène, c'est-à-dire constitué de fibres de différentes natures.

Des fils de différentes caractéristiques (nature du matériau, structure, diamètre. etc...) peuvent être agencés dans une même nappe. Les nappes superposées peuvent être également de nature et caractéristiques différentes.

Les fibres , par exemple dans le cas de nappe non-tissée, sont mono- ou multi-filament.

La ou les nappe(s) peuvent être des tissages, d'armure quelconque, identiques ou non, des nappes non-tissées, d'épaisseur variable ou des tricotages à mailles quelconques, cueillies ou jetées.

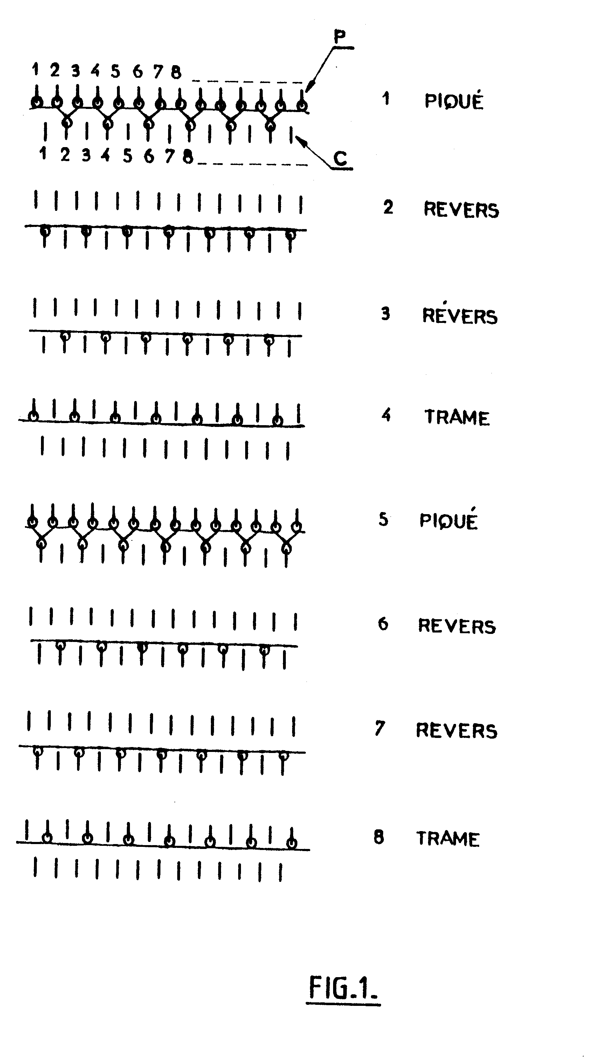

La figure 1 illustre un mode d'obtention d'un tricot spécial particulièrement adapté à l'obtention d'un produit conforme à l'invention et remarquable par ses excellentes qualités de résistance mécanique.

Sur la figure 1, on a symbolisé en P et C, respectivement, les rangées d'aiguilles de deux fontures, de plateau et de cylindre, d'un métier à tricoter circulaire, huit chutes numérotées 1 à 8 étant illustrées sur cette figure.

La contexture de ce tricot est formée d'un ensemble de mailles jetées se composant d'un piqué, de deux revers cylindre et d'une trame plateau avec répétition toutes les huit chutes.

La contexture de ce tricot permet l'utilisation de fibres de polyaramide, plus connues sous la dénomination commerciale "KEVLAR", par exemple des fibres de numéro métrique 1/56.

Bien entendu, le choix du matériau, de la structure et des dimensions des fils ou fibres, de la contexture de la nappe 1 ou des nappes superposées, n'est pas arbitraire, il découle notamment de la nature, de la morphologie et des contraintes ou sollicitations auxquelles devront faire face la ou les pièces monoblocs réalisées dans ledit produit, ce choix étant laissé à l'appréciation de l'homme de l'art qui est parfaitement en mesure, en fonction de ses connaissances et des diverses propriétés des fils ou fibres utilisables, de déterminer les divers paramètres de la structure selon l'invention.

Il en est de même de la résine utilisable comme matrice de liaison. Comme résines on peut citer les résines thermodurcissables, notamment phénoplastes, aminoplastes, éthoxylines (époxydes), polyesters insaturées, polyuréthanes réticulées, alkydes, les résines thermoplastiques, notamment polyvinyliques, polyoléfines, cellulosiques, polyamides, les polymères spéciaux tels que polyesters saturés. polyuréthanes linéaires, polycarbonates, ou les élastomères tels que le silicone, les caoutchoucs naturels et synthétiques et leurs dérivés.

Avant la mise en place de la résine. la ou les nappes 1 sont enroulées sur elles-mêmes, manuellement ou mécaniquement, en un nombre quelconque de couches plus ou moins serrées selon les applications.

La matrice est ensuite réalisée par différentes techniques telles que le trempage, ou l'injection sous pression dans un moule dans lequel est mise en place, au préalable, la nappe enroulée.

Les figures 2 et 3 illustrent une structure composite selon l'invention comprenant, outre la nappe 1 enroulée sur elle-même, des fils ou fibres de renfort 2 disposés parallèlement à l'axe y de l'enroulement entre les différentes couches de l'enroulement spiralé, et des fils ou fibres de renfort 3 disposés radialement dans l'enroulement.

L'ensemble 1, 2, 3 est noyé dans une matrice de liaison, non représentée sur les figures 2 et 3. La résine utilisée est évidemment choisie de manière à être compatible avec la nature des fils et fibres de la nappe 1 et de renfort 2,3. La résine peut être, éventuellement, renforcée par une charge pulvérulente ou micronisée, comme cela se fait couramment dans la technique des matériaux composites.

Les fibres 2,3 peuvent être en l'un quelconque des matériaux utilisés pour la nappe 1, en fonction des applications.

Dans le mode de réalisation des figures 2 et 3, on obtient, après mise en place de la matrice de liaison, un bloc rigide ou semi-rigide selon la nature de la résine et qui présente d'excellentes caractéristiques de résistance mécanique, en particulier en flexion, flambage, compression, traction, cisaillement et à l'usure, dans les trois directions x,y et z du fait de la conjugaison, modulée à volonté, de la nappe 1 enroulée, des fibres de renfort 2 parallèles à l'axe y et des fibres de renfort 3 radiales.

Les fils 2 sont, par exemple, des fibres polyaramides, jointives ou non, en une ou plusieurs couches entre chaque tour de l'enroulement.

Les fils 3 (également des fibres polyaramides, par exemple) partent de l'axe y et rayonnent vers l'extérieur en étant régulièrement distribuées ou non, sur toute l'épaisseur ou non de l'enroulement, en fonction d'éventuels renforcements locaux dans l'ensemble enroulé.

Les fils 3 peuvent traverser ledit ensemble diamétralement, ou suivant une corde, ou suivant tout autre trajet.

Le nombre, la nature, la disposition et l'orientation des fils ou fibres 2 et 3 dépendent de la nécessité de renforcer plus ou moins les propriétés de résistance mécanique suivant l'un des axes x,y,z, ou certains de ceux-ci, toujours en fonction de la nature, de la morphologie et de la destination de la ou des pièces qui seront usinées dans le bloc matriciel ainsi obtenu.

Les parois du moule dans lequel est placé l'enroulement pour la mise en place de la matrice injectée peuvent être conformées en fonction de la pièce définitive à obtenir.

Avec un produit composite tel que celui des figures 2 et 3, on obtiendra une pièce qui conservera, même si sa morphologie est complexe et si elle comporte une cavité par exemple, en tout point de sa masse, d'excellentes qualités de résistance mécanique dans les trois directions x,y,z, la cavité, en particulier. n'introduisant aucune zone de faiblesse dans la pièce, du fait de la distribution spatiale des fils et fibres 2 et 3 et de ceux de la nappe 1.

Il est également à noter que dans le cas où l'axe de la pièce à usiner est confondu avec l'axe y de l'enroulement, on obtient une pièce remarquable en ce qu'elle présente des propriétés de résistance isotropes par rapport à son axe.

L'usinage peut se faire par toute technique appropriée.

La mise en place des fils ou fibres 2, 3 se fait à la main ou à la machine.

Les fils ou fibres 2 peuvent être mis en place avant ou pendant le roulage sur elle-même de la nappe 1.

Les fils ou fibres 3 sont de préférence mis en place après le roulage. Ces fils 3 peuvent être des fils de couture distribués suivant des lignes quelconques, rectilignes ou non, traversant tout ou partie de la masse enroulée, répartis de manière plus ou moins dense, localement seulement ou sur toute la périphérie de l'enroulement.

Dans le cas de nappe(s) 1 tricotée(s), les fils ou fibres de renfort 3 peuvent même être constitués par des mailles d'une nappe étirée radialement par crochetage ou aiguilletage.

D'une manière générale, quelle que soit la nappe 1 (tissée, non-tissée, tricotée), les fils ou fibres de renfort tels que 2 et 3 peuvent être de nature quelconque, à l'état individuel, amalgamé, agglutiné ou filé et être orientés de manière quelconque par rapport à la nappe, en fonction des applications.

Dans le cas d'une nappe 1 tissée, ces fils ou fibres sont disposés dans le sens de la trame, ou de la chaîne, ou suivant toute autre direction.

Le diamètre des fils et fibres est également variable.

Le taux ou proportion des fils ou fibres par rapport à la ou les nappes de base, dépend des efforts demandés au produit dans son application spécifique.

Dans le cas d'une nappe munie de coutures de renfort, l'ensemble peut éventuellement être utilisé "à sec", c'est-à-dire sans ladite résine de liaison.

La figure 4 illustre une variante de réalisation du produit composite selon l'invention, dans laquelle la nappe unique ou les nappes superposées ne sont plus enroulées sur elles-mêmes mais remplacées par plusieurs nappes tubulaires indépendantes 4 disposées concentriquement, et également munies de fils ou fibres de renfort disposés parallèlement à l'axe de la structure concentrique (fils 2), entre les diverses nappes 4 ou entre certaines seulement, ainsi que radialement (fils 3). Les nappes 4 ont ou non les mêmes natures ou compositions.

La mise en place d'une telle structure concentrique se fait, par exemple dans le cas de nappes 4 tricotées, par le tricotage simultané et en parallèle, autour du même axe, de plusieurs nappes tubulaires de diamètres différents qui se recouvrent concentriquement à la sortie du métier, les fils ou fibres de renfort 2 étant introduits aux endroits désirés , parallèlement à l'axe de la structure concentrique, au cours du tricotage.

Enfin, l'invention n'est évidemment pas limitée aux modes de réalisations représentés et décrits ci-dessus mais en couvre au contraire toutes les variantes.

## Revendications

1. Nouveau produit composite caractérisé en ce qu'il est constitué d'une armature ou étoffe comprenant au moins une nappe (1) enroulée sur elle-même ou plusieurs nappes tubulaires (4) disposées concentriquement, de fils ou fibres tissés, non-tissés ou tricotés. et de fils ou fibres de renfort (2.3) insérés entre au moins certaines des couches successives de la ou les nappes, parallèlement à l'axe de la structure enroulée ou concentrique et transversalement à cette dernière, l'ensemble étant moulé dans une matrice de liaison.

2. Nouveau produit composite suivant la revendication 1, caractérisé en ce que les fils ou fibres de renfort (2.3) sont constitués en tout ou partie par une ou plusieurs coutures réalisées dans la totalité ou une partie de la masse de la structure enroulée ou concentrique.

3. Nouveau produit composite suivant la revendication 1 ou 2, caractérisé en ce que la ou les nappes (1, 4) sont constituées par un tricot dont la contexture est formée d'un ensemble de mailles jetées se composant d'un piqué, de deux revers cylindriques et d'une trame plateau, avec répétition toutes les huit chutes.

4. Nouveau produit composite suivant l'une des revendications 1 à 3, caractérisé en ce qu'il comporte des fils ou fibres de renfort (3) disposées radialement à la structure enroulée ou concentrique, localement ou dans toute la masse de cette dernière.

5. Nouveau produit composite suivant l'une des revendications 1 à 4, caractérisé en ce que les fils ou fibres de renfort (2,3) sont des fibres polyaramides.

6. Nouveau produit composite suivant l'une des revendications 1 à 5, caractérisé en ce que la résine comporte une charge pulvérulente ou micronisée.

FIG.1.

0227570

FIG.2.

FIG 4

FIG.3.